# EUROPEAN PATENT SPECIFICATION

(11) **EP 2 763 223 B1**
(45) Date of publication and mention of the grant of the patent: **16.11.2016**
(21) Application number: 12837448.5
(22) Date of filing: 25.09.2012
(51) Int. Cl.: H01M 8/02, C08K 3/04, C08L 61/06, C08L 63/04

(54) **POROUS SEPARATOR FOR FUEL CELLS**
PORÖSER SEPARATOR FÜR BRENNSTOFFZELLEN
SÉPARATEUR POREUX POUR PILES À COMBUSTIBLE

(30) Priority: 26.09.2011 JP 2011208505
(43) Date of publication of application: 06.08.2014
(73) Proprietor: Nisshinbo Chemical Inc., Chuo-ku, Tokyo 1038650 (JP)
(72) Inventor: TANNO, Fumio, Chiba 267-0056 (JP)
(74) Representative: Bailey, Sam Rogerson
(86) International application number: PCT/JP2012/074493
(87) International publication number: WO 2013/047485

(56) References cited:
- EP-A1- 1 657 269
- EP-A1- 1 890 352
- JP-A- 2008 123 828
- JP-A- 2010 040 232
- JP-A- 2011 028 986

## Description

### TECHNICAL FIELD

The present invention relates to a porous bipolar plate for fuel cells.

### BACKGROUND ART

One role of the fuel cell bipolar plate is to confer each unit cell with electrical conductivity. In addition, bipolar plates provide flow channels for the supply of fuel and air (oxygen) to the unit cells and also serve as boundary walls separating the unit cells.

Characteristics required of a bipolar plate thus include a high electrical conductivity, a high impermeability to gases, chemical stability, heat resistance and hydrophilicity.

In particular, a porous bipolar plate which is capable of collecting water at the interior allows water to move in the stacking direction of the positive and negative electrodes. However, owing to its porous construction, such a bipolar plate is not sufficiently strong, in addition to which the strength tends to decline over time, lowering the operating efficiency and shortening the life of the fuel cell.

In this connection, Patent Document 1 discloses a molding composition which includes graphite, an epoxy resin, a phenolic resin and an imidazole catalyst. With compression to a molded product density comparable to that of graphite, a low electrical resistance and a high flexural stress are achieved (while ensuring gas impermeability). However, Patent Document 1 makes no mention of the compressive strength of such a molded product.

Patent Document 2 discloses a water transfer plate obtained by carbonizing and graphitizing a resin component, although such a plate has a maximum compressive yield strength of about 7.59 MPa, which is low.

Patent Document 3 discloses a porous bipolar plate composed of a resin composition which has been reinforced with carbon fibers. However, here too, the compressive strength is about 14.5 MPa, which is inadequate.

### PRIOR ART DOCUMENTS

### PATENT DOCUMENTS

Patent Document 1: JP-A 2001-520245
Patent Document 2: JP-A 2002-518815
Patent Document 3: JP-A 2001-509950

### SUMMARY OF THE INVENTION

### PROBLEMS TO BE SOLVED BY THE INVENTION

It is therefore an object of the present invention to provide a porous bipolar plate for fuel cells which has a porosity characterized by good water absorption and good water permeability, and yet is endowed with a high compressive strength and excellent compressive strength retention.

### MEANS FOR SOLVING THE PROBLEMS

The inventor, having conducted extensive investigations in order to attain the above object, has discovered as a result that by using a resin component containing a novolac epoxy resin of a specific ICI viscosity and a novolac phenolic resin of a specific hydroxyl equivalent weight as the binder for a carbon material, there can be obtained a porous bipolar plate which has a good water absorption and a good water permeability, and which is also endowed with a high compressive strength and an excellent compressive strength retention.

Accordingly, the invention provides:
1. A porous bipolar plate for fuel cells which is obtained by molding a composition containing a carbon material powder and a resin component, wherein the resin component includes an epoxy resin and a curing agent for the epoxy resin, the epoxy resin being a phenol-novolac epoxy resin having an ICI viscosity at 150°C of from 0.3 to 0.9 Pa·s and an epoxy equivalent weight of from 175 to 195 g/eq and the curing agent being a novolac phenolic resin having a hydroxyl equivalent weight of from 103 to 106 g/eq; the composition contains from 10 to 13 parts by weight of the resin component per 100 parts by weight of the carbon material powder; and the bipolar plate has a porosity of from 16 to 25% by volume, a water absorption time of 50 seconds or less, and a compressive strength of from 50 to 80 MPa;
2. The porous bipolar plate for fuel cells according to 1 above, which bipolar plate has a compressive strength retention of at least 95%;
3. The porous bipolar plate for fuel cells according to 1 or 2 above, wherein the carbon material powder is a synthetic graphite powder which has a mean particle size (d = 50) of from 20 to 80 µm and contains at most 1 wt % of particles 1 µm or smaller in size and at most 1 wt % of particles 300 µm or larger in size;
4. The porous bipolar plate for fuel cells according to any one of 1 to 3 above, wherein the resin component further includes an imidazole compound having a molecular weight of from 140 to 180 as a curing accelerator; and
5. The porous bipolar plate for fuel cells according to 4 above, wherein the imidazole compound is one or more selected from among 2-phenylimidazole, 2-phenyl-4-methylimidazole and 1-benzyl-2-methylimidazole.

### ADVANTAGEOUS EFFECTS OF THE INVENTION

The porous bipolar plate for fuel cells of the invention is characterized by having a good water absorption and water permeability, by also having a good compressive strength and compressive strength retention, and moreover by having a high gas leak pressure.

Furthermore, in spite of its porous structure, the porous bipolar plate of the invention has a flexural strength which is fully adequate for practical use as a bipolar plate.

### EMBODIMENT FOR CARRYING OUT THE INVENTION

The invention is described more fully below.

The porous bipolar plate for fuel cells of the invention (referred to below simply as "the porous bipolar plate") is obtained by molding a composition containing a carbon material powder and a resin component. The resin component includes an epoxy resin and a curing agent for the epoxy resin. The epoxy resin is a phenol-novolac epoxy resin having an ICI viscosity at 150°C of from 0.3 to 0.9 Pa·s and an epoxy equivalent weight of from 175 to 195 g/eq. The curing agent for the epoxy resin is a novolac phenolic resin having a hydroxyl equivalent weight of from 103 to 106 g/eq. The composition contains from 10 to 13 parts by weight of the resin component per 100 parts by weight of the carbon material powder. The bipolar plate has a porosity of from 16 to 25% by volume, a water absorption time of 50 seconds or less, and a compressive strength of from 50 to 80 MPa.

In this invention, the phenol-novolac epoxy resin has an epoxy equivalent weight of from 175 to 195 g/eq. When an epoxy resin having an epoxy equivalent weight within this range is used, the resin has a suitable molecular weight. Moreover, the crosslink density of the cured product increases, as a result of which the hot water resistance of the resulting porous bipolar plate can be further improved.

To further increase the hot water resistance of the resulting porous bipolar plate, an epoxy equivalent weight of from 180 to 190 g/eq is preferred.

The phenol-novolac epoxy resin has an ICI viscosity at 150°C of from 0.3 to 0.9 Pa·s. By using an epoxy resin with an ICI viscosity in this range, the resin has a suitable molecular weight, giving the resulting porous bipolar plate a good heat resistance. Moreover, because the resin has good flow properties, the molding processability is good, enabling, for example, the pressure during molding to be lowered, and thus making it possible to obtain a porous bipolar plate having a uniform pore distribution.

To further enhance the heat resistance and molding processability of the resulting porous bipolar plate, the ICI viscosity is more preferably from 0.4 to 0.6 Pa·s.

In this invention, a novolac phenolic resin having a hydroxyl equivalent weight of from 103 to 106 g/eq may be used as the phenolic resin that acts as the curing agent for the epoxy resin. When a novolac phenolic resin having a hydroxyl equivalent weight within this range is used, the resin has a suitable molecular weight. Moreover, the crosslink density of the cured product increases, enabling the hot water resistance of the resulting porous bipolar plate to be further improved.

To further increase the hot water resistance of the resulting bipolar plate, a novolac phenolic resin having a hydroxyl equivalent weight of from 103 to 105 g/eq is preferred.

To prevent unreacted ingredients from remaining within the bipolar plate, the amount of the above phenolic resin included is preferably from 0.98 to 1.02 equivalents per the phenol-novolac epoxy resin. By setting the amount of phenolic resin included within this range, the amount of residual unreacted ingredient (epoxy resin or phenolic resin) within the bipolar plate decreases, making it possible to prevent such undesirable effects as the leaching out of unreacted ingredients during power generation.

It is preferable to include a curing accelerator within the resin component of the invention. The curing accelerator is not subject to any particular limitation, provided it accelerates the reaction between the epoxy resin and the curing agent. Illustrative examples include phosphine compounds such as triphenylphosphine (TPP) and tetraphenylphosphine; amine compounds such as diazabicycloundecene (DBU) and dimethylbenzylamine (BDMA); and imidazole compounds such as 1-phenylimidazole, 1-(2-chlorophenyl)imidazole, 1-(3-chlorophenyl)imidazole, 1-(4-chlorophenyl)imidazole, 1-(3-fluorophenyl)imidazole, 1-(4-fluorophenyl)imidazole, 1-(4-methoxyphenyl)imidazole, 1-o-tolylimidazole, 1-m-tolylimidazole, 1-(3,5-dimethylphenyl)imidazole, 2-phenylimidazole, 2-phenyl-4-methylimidazole, 2-(4-chlorophenyl)imidazole, 2-(4-fluorophenyl)imidazole, 5-phenylimidazole, 5-(2-chlorophenyl)imidazole, 5-(3-chlorophenyl)imidazole, 5-(4-chlorophenyl)imidazole, 5-(2-fluorophenyl)imidazole, 5-(3-fluorophenyl)imidazole, 5-(4-fluorophenyl)imidazole, 5-(2-methoxyphenyl)imidazole, 5-(3-methoxyphenyl)imidazole, 5-(4-methoxyphenyl)imidazole, 5-o-tolylimidazole, 5-m-tolylimidazole, 5-p-tolylimidazole and 1-benzyl-2-methylimidazole. These may be used singly, or two or more may be used in combination.

Of the foregoing compounds, to increase the heat stability of the binder component resin, to prevent the curing reaction from proceeding abruptly within the mold during molding of the bipolar plate, leading to an increased melt viscosity and molding pressure, and to provide a suitable activity as a curing accelerator, the use of an imidazole compound is preferred, with an aromatic ring-containing imidazole being especially preferred. Such imidazole compounds having a molecular weight of from 140 to 180 are preferred. Specifically, the use of 2-phenylimidazole, 2-phenyl-4-methylimidazole or 1-benzyl-2-methylimidazole is preferred.

To have the curing reaction proceed efficiently and gradually, the amount of curing accelerator included is preferably from 0.65 to 1.02 parts by weight per 100 parts by weight of the mixture of the phenol-novolac epoxy resin and the novolac phenolic resin. By setting the amount of curing accelerator included within this range, the binder resin curing reaction can be made to proceed fully and rapidly, in addition to which the binder component resin ends up having a good heat stability. As a result, it is possible to prevent the curing reaction from proceeding abruptly within the mold and the melt viscosity from rising. Moreover, the curing reaction can be prevented from proceeding during storage.

Illustrative examples of the carbon material powder used in this invention include natural graphite, synthetic graphite obtained by firing needle coke, synthetic graphite obtained by firing vein coke, graphite obtained by grinding electrodes to powder, coal pitch, petroleum pitch, coke, activated carbon, glassy carbon, acetylene black and Ketjenblack. These may be used singly, or two or more may be used in combination. Of these, graphite powder such as synthetic graphite obtained by firing needle coke or synthetic graphite obtained by firing vein coke is preferred.

Although the mean particle size (d = 50) of the synthetic graphite powder is not particularly limited, taking into account the balance between the water permeability and strength of the porous bipolar plate obtained, the mean particle size is preferably from 20 to 80 µm, more preferably from 30 to 60 µm, and even more preferably from 40 to 50 µm.

In particular, to fully elicit the strength of the porous bipolar plate, a synthetic graphite material which contains not more than 1 wt % of graphite particles 1 µm or smaller in size and not more than 1 wt % of particles 300 µm or larger in size is more preferred, and a synthetic graphite material which contains not more than 1 wt % of graphite particles 3 µm or smaller in size and not more than 1 wt % of particles 250 µm or larger in size is more preferred.

The mean particle size (d = 50) is a value measured with a particle size analyzer (available from Nikkiso Co., Ltd.).

The relative amounts of the carbon material powder and the resin component (the amount of resin component here being the collective amount of epoxy resin, phenolic resin and curing accelerator) used in this invention are preferably 10 to 13 parts by weight of the resin component per 100 parts by weight of the carbon material powder.

When the amount of binder component resin used is less than 10 parts by weight, because the porosity exceeds 25% by volume, the water permeability is higher, but the strength of the bipolar plate may decrease. On the other hand, if the amount exceeds 13 parts by weight, the porosity becomes less than 16% by volume, as a result of which the water permeability may decrease.

The composition of the invention may also include an internal mold release agent in order to increase the mold releasability. Illustrative examples of internal mold release agents include stearic acid wax, amide wax, montanic acid wax, carnauba wax and polyethylene wax. These may be used singly, or two or more may be used in combination.

The content of internal mold release agent in the composition, although not particularly limited, is typically from 0.1 to 1.5 parts by weight, and especially from 0.3 to 1.0 part by weight, per 100 parts by weight of the carbon material powder.

The porous bipolar plate of the invention is obtained by molding the above composition into a desired bipolar plate shape. No particular limitation is imposed on the method of preparing the composition and the bipolar plate molding method. That is, use may be made of various hitherto known methods.

The composition may be prepared by, for example, mixing the starting materials for the resin component composed primarily of the above-described epoxy resin with the graphite powder, the respective ingredients being mixed together in any order and in the prescribed proportions. Illustrative examples of mixers that may be used for such mixing include planetary mixers, ribbon blenders, Loedige mixers, Henschel mixers, rocking mixers and Nauta mixers.

Examples of the method used to mold the bipolar plate include, but are not particularly limited to, injection molding, transfer molding, compression molding and extrusion. Of these, to obtain a bipolar plate of outstanding precision and mechanical strength, the use of compression molding is preferred.

The compression molding conditions are a mold temperature of from 150 to 180°C, a molding pressure of at least 1.0 MPa and less than 20 MPa, and preferably from 2.0 to 10 MPa, and a molding time of from 20 seconds to 5 minutes.

The mold temperature should be a temperature at which the resin component fully thermosets.

At a molding pressure of at least 1.0 MPa, the molded article is able to achieve a strength that allows it to maintain a porous structure shape. At a molding pressure less than 20 MPa, the graphite powder is not deformed and compressed more than necessary, thus avoiding pore obstruction and difficulties with pore regulation.

Subjecting the surface of the porous bipolar plate obtained by molding as described above to an existing hydrophilizing treatment such as plasma treatment, corona discharge treatment, flame treatment or UV treatment enables further improvement in the performance of the porous bipolar plate to be achieved, such as shortening of the water absorption time.

In addition, by carrying out surface treatment that entails laser irradiation of the bipolar plate, it is possible to remove the resin component in the bipolar plate surface layer and thus lower the surface resistance of the bipolar plate.

The porous bipolar plate obtained as described above has the following characteristics: a porosity of from 16 to 25% by volume, a water absorption time of not more than 50 seconds, a compressive strength of from 50 to 80 MPa, and a flexural strength of from 21 to 35 MPa.

The porosity is preferably from 18 to 20% by volume. A shorter water absorption time is better, with a time of 30 seconds or less being preferred. The compressive strength is preferably from 60 to 80 MPa, and the flexural strength is preferably from 25 to 30 MPa.

The porous bipolar plate of the invention exhibits a high compressive strength retention of at least 95%.

In addition, the porous bipolar plate of the invention retains water within the pores and has a structure which is porous to a degree that allows the movement of such retained water within the bipolar plate.

Specifically, the porous bipolar plate of the invention has a gas leak pressure of from about 50 to about 80 kPa, and a water permeability of from about 450×10⁻¹⁷ to about 750×10⁻¹⁷ m².

### EXAMPLES

Examples of the invention and Comparative Examples are given below by way of illustration and not by way of limitation.

The various properties in the Examples below were measured by the following methods.

### [1] ICI Viscosity

The melt viscosity at 150°C was measured using a cone/plate type ICI viscometer. The measuring cone of the ICI viscometer was selected according to the viscosity of the specimen, a sample of the resin was set in place, and 90 seconds later the cone was rotated. The value indicated on the viscometer was read off 30 seconds after the start of cone rotation.

### [2] Porosity

The porosity was measured by mercury injection porosimetry using a test piece cut from the bipolar plate.

### [3] Water Absorption Time

In a thermostatic chamber set to a relative humidity of 80% and a temperature of 25°C, 0.0025 g of ion-exchanged water was dripped onto a gas flow channel surface and the time until the water was absorbed into the bipolar plate surface was measured.

### [4] Compressive Strength

The compressive strength of the bipolar plate in the stacking direction was measured in accordance with JIS R7212 for a test piece cut from a bipolar plate.

### [5] Compressive Strength Retention (strength measurement following immersion in 125°C water)

A test piece cut from a bipolar plate and 400 mL of ion-exchanged water were placed in a 500 mL SUS stainless steel pressure vessel, following which the vessel was closed then heated to an internal temperature of 125°C. After 3,000 hours, the test piece was taken out and the compressive strength was measured. The percent retention of strength was calculated with respect to the initial compressive strength.

According to the Arrhenius 10°C doubling rule, the above test conditions of 3,000 hours at 125°C correspond to a fuel cell operating time of 11 years at an operating temperature of 75°C.

### [6] Flexural Strength

Using the test pieces described above which were cut from bipolar plates that had just been molded, the flexural strengths of test pieces at a distance between support points of 40 mm were measured in accordance with JIS K6911 (Testing methods for thermosetting plastics), and treated as the initial flexural strength.

### Example 1

A fuel cell bipolar plate composition was prepared by charging a Henschel mixer with 100 parts by weight of synthetic graphite obtained by firing needle coke (mean particle size: 30 µm at d = 50 in particle size distribution; particles 1 µm or smaller in size, 0.2 wt %; particles 300 µm or larger in size, 0.2 wt %) and a resin component made up of 7.48 parts by weight of a phenol-novolac epoxy resin (ICI viscosity at 150°C, 0.3 Pa·s; epoxy equivalent weight, 177 g/eq), 4.44 parts by weight a novolac phenolic resin (hydroxyl equivalent weight, 104 g/eq) and 0.077 part by weight of 2-phenylimidazole, then mixing these ingredients together for 3 minutes at 500 rpm.

The resulting composition was charged into a mold for producing fuel cell bipolar plates and compression-molded at a mold temperature of 185°C, a molding pressure of 5.2 MPa and a molding time of 30 seconds, thereby giving a fuel cell bipolar plate having dimensions of 200 mm × 200 mm × 2 mm.

### Example 2

Aside from changing, in Example 1, the phenol-novolac epoxy resin to 7.68 parts by weight of a phenol-novolac epoxy resin having an ICI viscosity at 150°C of 0.5 Pa·s and an epoxy equivalent weight of 190 g/eq and changing the novolac phenolic resin to 4.24 parts by weight of a novolac phenolic resin having a hydroxyl equivalent weight of 104 g/eq, a composition was prepared and compression-molded in the same way as in Example 1, giving a fuel cell bipolar plate.

### Example 3

Aside from changing, in Example 1, the phenol-novolac epoxy resin to 7.75 parts by weight of a phenol-novolac epoxy resin having an ICI viscosity at 150°C of 0.9 Pa·s and an epoxy equivalent weight of 195 g/eq and changing the novolac phenolic resin to 4.14 parts by weight of a novolac phenolic resin having a hydroxyl equivalent weight of 104 g/eq, a composition was prepared and compression-molded in the same way as in Example 1, giving a fuel cell bipolar plate.

### Example 4

Aside from changing, in Example 1, the phenol-novolac epoxy resin to 6.40 parts by weight of a phenol-novolac epoxy resin having an ICI viscosity at 150°C of 0.5 Pa·s and an epoxy equivalent weight of 190 g/eq, changing the novolac phenolic resin to 3.54 parts by weight of a novolac phenolic resin having a hydroxyl equivalent weight of 104 g/eq and changing the amount of 2-phenylimidazole included to 0.065 part by weight, a composition was prepared and compression-molded in the same way as in Example 1, giving a fuel cell bipolar plate.

### Example 5

Aside from changing, in Example 1, the phenol-novolac epoxy resin to 8.32 parts by weight of a phenol-novolac epoxy resin having an ICI viscosity at 150°C of 0.5 Pa·s and an epoxy equivalent weight of 190 g/eq, changing the novolac phenolic resin to 4.60 parts by weight of a novolac phenolic resin having a hydroxyl equivalent weight of 104 g/eq and changing the amount of 2-phenylimidazole included to 0.084 part by weight, a composition was prepared and compression-molded in the same way as in Example 1, giving a fuel cell bipolar plate.

### Comparative Example 1

Aside from changing, in Example 1, the phenol-novolac epoxy resin to 5.76 parts by weight of a phenol-novolac epoxy resin having an ICI viscosity at 150°C of 0.5 Pa·s and an epoxy equivalent weight of 190 g/eq, changing the novolac phenolic resin to 3.18 parts by weight of a novolac phenolic resin having a hydroxyl equivalent weight of 104 g/eq and changing the amount of 2-phenylimidazole included to 0.058 part by weight, a composition was prepared and compression-molded in the same way as in Example 1, giving a fuel cell bipolar plate.

### Comparative Example 2

Aside from changing, in Example 1, the phenol-novolac epoxy resin to 8.96 parts by weight of a phenol-novolac epoxy resin having an ICI viscosity at 150°C of 0.5 Pa·s and an epoxy equivalent weight of 190 g/eq, changing the novolac phenolic resin to 4.95 parts by weight of a novolac phenolic resin having a hydroxyl equivalent weight of 104 g/eq and changing the amount of 2-phenylimidazole included to 0.090 part by weight, a composition was prepared and compression-molded in the same way as in Example 1, giving a fuel cell bipolar plate.

### Comparative Example 3

Aside from changing, in Example 1, the phenol-novolac epoxy resin to 6.50 parts by weight of an o-cresol-novolac epoxy resin having an ICI viscosity at 150°C of 0.3 Pa·s and an epoxy equivalent weight of 199 g/eq, changing the novolac phenolic resin to 3.43 parts by weight of a novolac phenolic resin having a hydroxyl equivalent weight of 104 g/eq and changing the amount of 2-phenylimidazole included to 0.065 part by weight, a composition was prepared and compression-molded in the same way as in Example 1, giving a fuel cell bipolar plate.

### Comparative Example 4

Aside from changing, in Example 1, the phenol-novolac epoxy resin to 8.45 parts by weight of an o-cresol-novolac epoxy resin having an ICI viscosity at 150°C of 0.3 Pa·s and an epoxy equivalent weight of 199 g/eq, changing the novolac phenolic resin to 4.46 parts by weight of a novolac phenolic resin having a hydroxyl equivalent weight of 104 g/eq and changing the amount of 2-phenylimidazole included to 0.084 part by weight, a composition was prepared and compression-molded in the same way as in Example 1, giving a fuel cell bipolar plate.

### Comparative Example 5

Aside from changing, in Example 1, the phenol-novolac epoxy resin to 5.99 parts by weight of a trisphenolmethane epoxy resin having an ICI viscosity at 150°C of 0.3 Pa·s and an epoxy equivalent weight of 158 g/eq, changing the novolac phenolic resin to 3.98 parts by weight of a novolac phenolic resin having a hydroxyl equivalent weight of 104 g/eq and changing the amount of 2-phenylimidazole included to 0.065 part by weight, a composition was prepared and compression-molded in the same way as in Example 1, giving a fuel cell bipolar plate.

### Comparative Example 6

In Example 1, aside from changing the phenol-novolac epoxy resin to 8.47 parts by weight of a dicyclopentadiene epoxy resin having an ICI viscosity at 150°C of 0.2 Pa·s and an epoxy equivalent weight of 255 g/eq, changing the novolac phenolic resin to 3.45 parts by weight of a novolac phenolic resin having a hydroxyl equivalent weight of 104 g/eq and changing the amount of 2-phenylimidazole included to 0.077 part by weight, a composition was prepared and compression-molded in the same way as in Example 1, giving a fuel cell bipolar plate.

The various characteristics of the bipolar plates obtained in above Examples 1 to 5 of the invention and Comparative Examples 1 to 6 were measured and evaluated. The results are shown in Table 1.

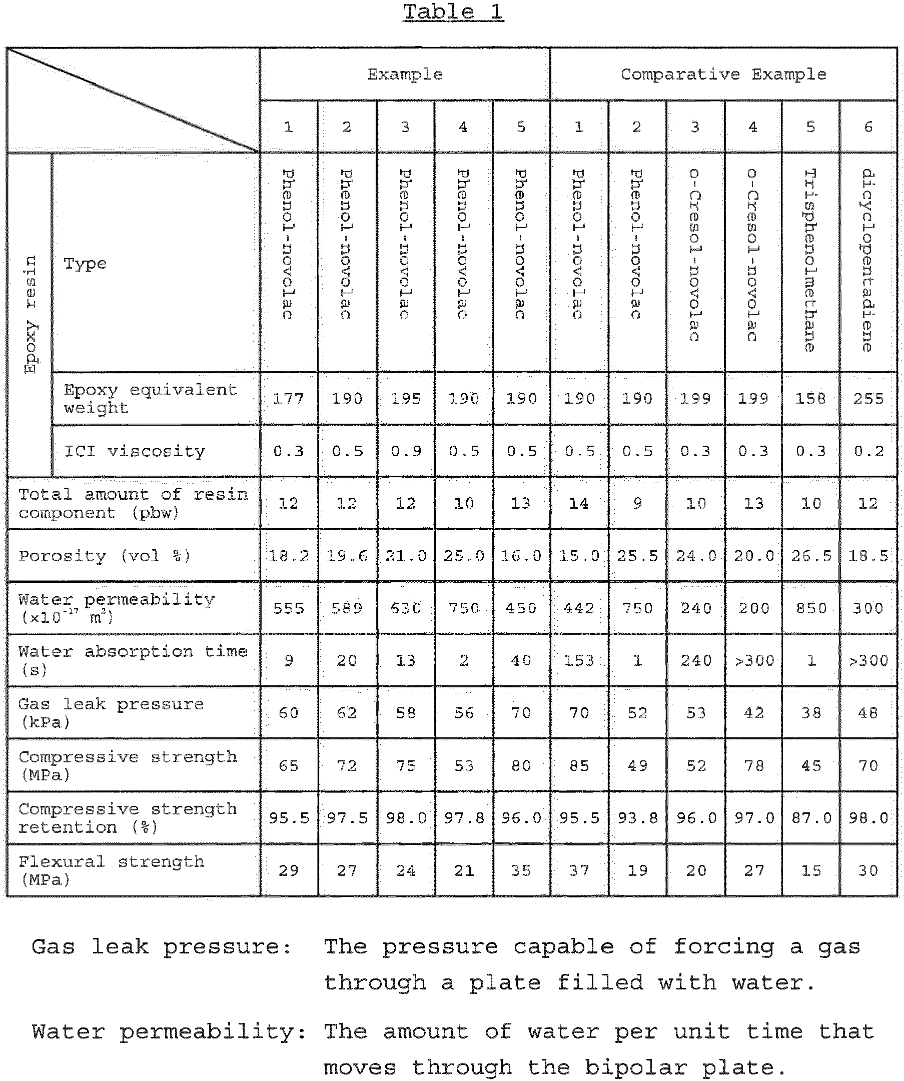

As shown in Table 1, although the porous bipolar plates obtained in Examples 1 to 5 had porous structures with short water absorption times and good water permeability, each of these bipolar plates had a good compressive strength and a good flexural strength, in addition to which the percent retention of compressive strength was high.

## Claims

1. A porous bipolar plate for fuel cells which is obtained by molding a composition comprising a carbon material powder and a resin component, wherein the resin component includes an epoxy resin and a curing agent for the epoxy resin, the epoxy resin being a phenol-novolac epoxy resin having an ICI viscosity at 150°C of from 0.3 to 0.9 Pa·s and an epoxy equivalent weight of from 175 to 195 g/eq and the curing agent being a novolac phenolic resin having a hydroxyl equivalent weight of from 103 to 106 g/eq; the composition contains from 10 to 13 parts by weight of the resin component per 100 parts by weight of the carbon material powder; and the bipolar plate has a porosity of from 16 to 25% by volume, a water absorption time of 50 seconds or less, and a compressive strength of from 50 to 80 MPa.

2. The porous bipolar plate for fuel cells according to claim 1, which bipolar plate has a compressive strength retention of at least 95%.

3. The porous bipolar plate for fuel cells according to claim 1 or 2, wherein the carbon material powder is a synthetic graphite powder which has a mean particle size (d = 50) of from 20 to 80 µm and contains at most 1 wt % of particles 1 µm or smaller in size and at most 1 wt % of particles 300 µm or larger in size.

4. The porous bipolar plate for fuel cells according to any one of claims 1 to 3, wherein the resin component further includes an imidazole compound having a molecular weight of from 140 to 180 as a curing accelerator.

5. The porous bipolar plate for fuel cells according to claim 4, wherein the imidazole compound is one or more selected from among 2-phenylimidazole, 2-phenyl-4-methylimidazole and 1-benzyl-2-methylimidazole.

## Patentansprüche

1. Poröse bipolare Platte für Brennstoffzellen, die durch Formen einer, ein Kohlenstoffmaterialpulver und eine Harzkomponente umfassenden Zusammensetzung erzielt wird, worin die Harzkomponente ein Epoxidharz und ein Härtemittel für das Epoxidharz umfasst, wobei das Epoxidharz ein Phenol-Novolak-Epoxidharz ist, das eine ICI-Viskosität bei 150°C von 0,3 bis 0,9 Pa·s und ein EpoxidÄquivalent-Gewicht von 175 bis 195 g/eq aufweist, und das Härtemittel ein Novolak-Phenolharz ist, das ein Hydroxyl-Äquivalent-Gewicht von 103 bis 106 g/eq aufweist; die Zusammensetzung von 10 bis 13 Gewichtsanteile der Harzkomponente pro 100 Gewichtsanteile des Kohlenstoffmaterials enthält; und die bipolare Platte eine Porosität von 16 bis 25 Vol.-%, eine Wasserabsorptionszeit von 50 Sekunden oder weniger und eine Druckfestigkeit von 50 bis 80 MPa aufweist.

2. Poröse bipolare Platte für Brennstoffzellen gemäß Anspruch 1, wobei die bipolare Platte eine Druckfestigkeitsretention von mindestens 95% aufweist.

3. Poröse bipolare Platte für Brennstoffzellen gemäß Anspruch 1 oder 2, worin das Kohlenstoffmaterialpulver ein synthetisches Graphitpulver ist, das eine Durchschnittspartikelgröße (d = 50) von 20 bis 80 µm aufweist und höchstens 1 Gew.-% von Partikeln von 1 µm oder von geringerer Größe, und höchstens 1 Gew.-% von Partikeln von 300 µm oder von größerer Größe enthält.

4. Poröse bipolare Platte für Brennstoffzellen gemäß einem der Ansprüche 1 bis 3, worin die Harzkomponente ferner eine Imidazol-Verbindung umfasst, die ein Molekulargewicht von 140 bis 180 als einen Aushärtebeschleuniger aufweist.

5. Poröse bipolare Platte für Brennstoffzellen gemäß Anspruch 4, worin die Imidazol-Verbindung eine oder mehrere von aus 2-Phenyl-Imidazol, 2-Phenyl-4-Methly-Imidazol und 1-Benzyl-2-Methyl-Imidazol ausgewählt ist.

## Revendications

1. Plaque bipolaire poreuse pour cellules à combustible qui est obtenue par moulage d'une composition comprenant une poudre de matériau carboné et un composant résine, dans laquelle le composant résine comprend une résine époxy et un agent durcisseur pour la résine époxy, la résine époxy étant une résine époxy de phénol-novolaque ayant une viscosité ICI à 150°C de 0,3 à 0,9 Pa.s et un poids équivalent époxy de 175 à 195 g/éq, et l'agent durcisseur étant une résine phénolique novolaque ayant un poids équivalent hydroxyle de 103 à 106 g/éq ; la composition contient de 10 à 13 parties en poids du composant résine pour 100 parties en poids de la poudre de matériau carboné ; et la plaque bipolaire a une porosité de 16 à 25 % en volume, un temps d'absorption d'eau de 50 secondes ou moins, et une résistance à la compression de 50 à 80 MPa.

2. Plaque bipolaire poreuse pour cellules à combustible selon la revendication 1, laquelle plaque bipolaire a une rétention de la résistance à la compression d'au moins 95 %.

3. Plaque bipolaire poreuse pour cellules à combustible selon la revendication 1 ou 2, dans laquelle la poudre de matériau carboné est une poudre de graphite synthétique qui a une granulométrie moyenne (d = 50) de 20 à 80 µm et qui contient au plus 1 % en poids de particules ayant une taille de 1 µm ou moins et au plus 1 % en poids de particules ayant une taille de 300 µm ou plus.

4. Plaque bipolaire poreuse pour cellules à combustible selon l'une quelconque des revendications 1 à 3, dans laquelle le composant résine comprend en outre un composé imidazole ayant une masse moléculaire de 140 à 180, servant d'accélérateur de durcissement.

5. Plaque bipolaire poreuse pour cellules à combustible selon la revendication 4, dans laquelle le composé imidazole est un ou plusieurs composés choisis parmi le 2-phénylimidazole, le 2-phényl-4-méthylimidazole et le 1-benzyl-2-méthylimidazole.
